# EUROPEAN PATENT SPECIFICATION

(11) **EP 3 958 195 B1**
(45) Date of publication and mention of the grant of the patent: **07.08.2024**
(21) Application number: 20790885.6
(22) Date of filing: 20.01.2020
(51) Int. Cl.: G06Q 10/04, G06Q 50/06

(54) **ENERGY PREDICTION SYSTEM, ENERGY PREDICTION METHOD, PROGRAM, RECORDING MEDIUM, AND MANAGEMENT SYSTEM**
SYSTEM ZUR ENERGIEVORHERSAGE, VERFAHREN ZUR ENERGIEVORHERSAGE, PROGRAMM, AUFZEICHNUNGSMEDIUM UND VERWALTUNGSSYSTEM
SYSTÈME DE PRÉDICTION D'ÉNERGIE, PROCÉDÉ DE PRÉDICTION D'ÉNERGIE, PROGRAMME, SUPPORT D'ENREGISTREMENT ET SYSTÈME DE GESTION

(30) Priority: 19.04.2019 JP 2019080442
(43) Date of publication of application: 23.02.2022
(73) Proprietor: Panasonic Intellectual Property Management Co., Ltd., Osaka-shi, Osaka 540-6207 (JP)
(72) Inventor: BABA, Akira, Osaka-shi, Osaka 540-6207 (JP)
(74) Representative: Appelt, Christian W.
(86) International application number: PCT/JP2020/001665
(87) International publication number: WO 2020/213222

(56) References cited:
- WO-A1-2018/069958
- JP-A- 2017 147 869
- JP-A- 2018 078 779
- JP-A- 2018 078 779
- US-A1- 2015 177 764

## Description

### Technical Field

The present disclosure generally relates to an energy prediction system, an energy prediction method, a program, a storage medium, and a management system. More particularly, the present disclosure relates to an energy prediction system, an energy prediction method, a program, a storage medium, and a management system, all of which are configured or designed to predict energy consumption during a target monitor period according to a monitor target environment and an energy consumption status.

### Background Art

A technique for reading a wattmeter while simultaneously displaying a measured value thus obtained and other data on an indoor display device in a customer's house has been known in the art (see, for example, JP 2014-130015 A).

In the system of JP 2014-130015 A, the wattmeter automatically transmits read data such as a receipt and electricity usage to the indoor display device. This allows the customer to check the read data on the indoor display device. In addition, the indoor display device also presents a reduction target value.

According to JP 2014-130015 A, the performance and the target may be compared with each other. That is to say, the system of JP 2014-130015 A allows the user to see whether the power consumption record of late has accomplished the target. Nevertheless, the system of JP 2014-130015 A does not allow the user to determine whether or not the current power (energy) consumption status is moderate enough to accomplish the target at the end of a predetermined period.

JP 2018 078779 A describes a notification system including: a communication processing part for acquiring a power use amount of a user; a target setting part for setting a target value of a power use amount of a user within a predetermined first period on the basis of a tendency of past power use of the user; an estimated value calculation part for calculating an estimated value of a power use amount within a first period on the basis of the power use amount acquired by the communication processing part; and a notification processing part for notifying a user to promote suppression of power use when the estimated value exceeds the target value by at least a predetermined reference value within the first period.

### Summary of Invention

In view of the foregoing background, it is therefore an object of the present disclosure to provide an energy prediction system, an energy prediction method, a program, a storage medium, and a management system, all of which are configured or designed to determine whether or not the current energy consumption status will enable reducing energy consumption to a target value or less at the end of a predetermined period.

The above object is achieved by an energy prediction system according to claim 1, an energy prediction method according to claim 7, a program according to claim 8, a storage medium according to claim 9, and a management system according to claim 10. Claims 2 to 6 refer to especially advantageous realizations of the energy prediction system according to claim 1.

An energy prediction system according to an aspect of the present disclosure includes an estimated information acquisition unit, a consumption information acquisition unit, a first prediction unit an environmental information acquisition unit, a second prediction unit, and an output unit. The estimated information acquisition unit acquires estimated information indicating an estimated environmental state in a first predetermined period at a place where a management target is located. The consumption information acquisition unit acquires energy consumption information about a quantity of energy consumed by the management target in every second predetermined period. The first prediction unit predicts, based on a correlation between the estimated information and energy consumption, a quantity of energy, defining a target value of a quantity of energy that needs to be consumed over the first predetermined period, as a first predicted value. The environmental information acquisition unit is configured to acquire environmental information about an environment at the place in every second predetermined period included in the first predetermined period. The first prediction unit is further configured to correct and update the first predicted value in accordance with the environmental information. The second prediction unit predicts, in accordance with the energy consumption information about respective quantities of energy consumed in a predetermined number of second predetermined periods, a quantity of energy that is going to be consumed over the first predetermined period, as a second predicted value. The output unit outputs prediction result information about the first predicted value and the second predicted value.

An energy prediction method according to another aspect of the present disclosure includes an estimated information acquisition step, a consumption information acquisition step, a first prediction step, an environmental information acquisition step, a second prediction step, and an output step. The estimated information acquisition step includes acquiring estimated information indicating an estimated environmental state in a first predetermined period at a place where a management target is located. The consumption information acquisition step includes acquiring energy consumption information about a quantity of energy consumed by the management target in every second predetermined period. The first prediction step includes predicting, based on a correlation between the estimated information and energy consumption, a quantity of energy, defining a target value of a quantity of energy that needs to be consumed over the first predetermined period, as a first predicted value. The environmental information acquisition step includes acquiring environmental information about an environment at the place in every second predetermined period included in the first predetermined period. The first prediction step further includes correcting and updating the first predicted value in accordance with the environmental information.

The second prediction step includes predicting, in accordance with the energy consumption information about respective quantities of energy consumed in a predetermined number of second predetermined periods, a quantity of energy that is going to be consumed over the first predetermined period, as a second predicted value. The output step includes outputting prediction result information about the first predicted value and the second predicted value.

A program according to still another aspect of the present disclosure is a program designed to cause a computer to perform the energy prediction method described above.

A storage medium according to yet another aspect of the present disclosure is a non-transitory storage medium that stores thereon the program described above.

A management system according to yet another aspect of the present disclosure includes: the energy prediction system described above; an estimated information output unit to output the estimated information to the energy prediction system; and a consumption information output unit to output the energy consumption information to the energy prediction system.

### Brief Description of Drawings

FIG. 1 illustrates a configuration for a prediction device according to an exemplary embodiment;
FIG. 2 illustrates a configuration for a management system including the prediction device;
FIG. 3A is a graph showing a relationship between an average integral power consumption and a monthly average temperature;
FIG. 3B is a graph showing a result of a primary regressive analysis performed based on the integral power consumptions with respect to a plurality of second predetermined periods;
FIG. 4 shows how the prediction device operates;
FIG. 5A shows exemplary data displayed as a prediction result;
FIG. 5B shows another exemplary data displayed as a prediction result; and
FIG. 6 illustrates a configuration for a prediction device according to a first variation.

### Description of Embodiments

Note that the embodiment and its variations to be described below is only examples of the present disclosure and should not be construed as limiting. Rather, the exemplary embodiment and its variations may be readily modified in various manners depending on a design choice or any other factor without departing from the scope of the present invention as defined by the claims.

### (Embodiment)

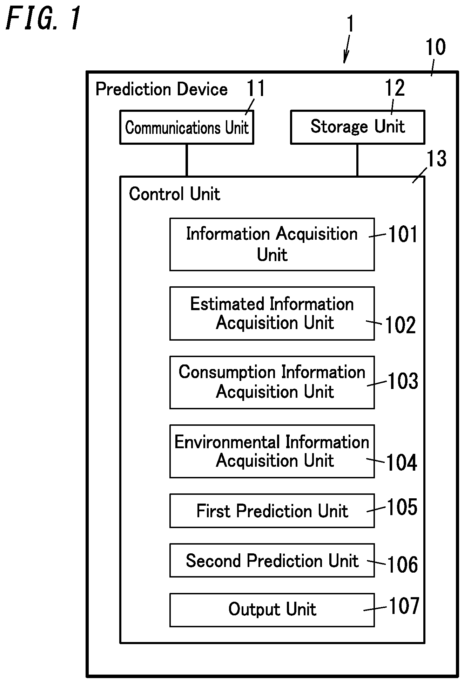

An energy prediction system according to this embodiment and a management system including the energy prediction system will now be described with reference to FIGS. 1-5B.

### (1) Overview

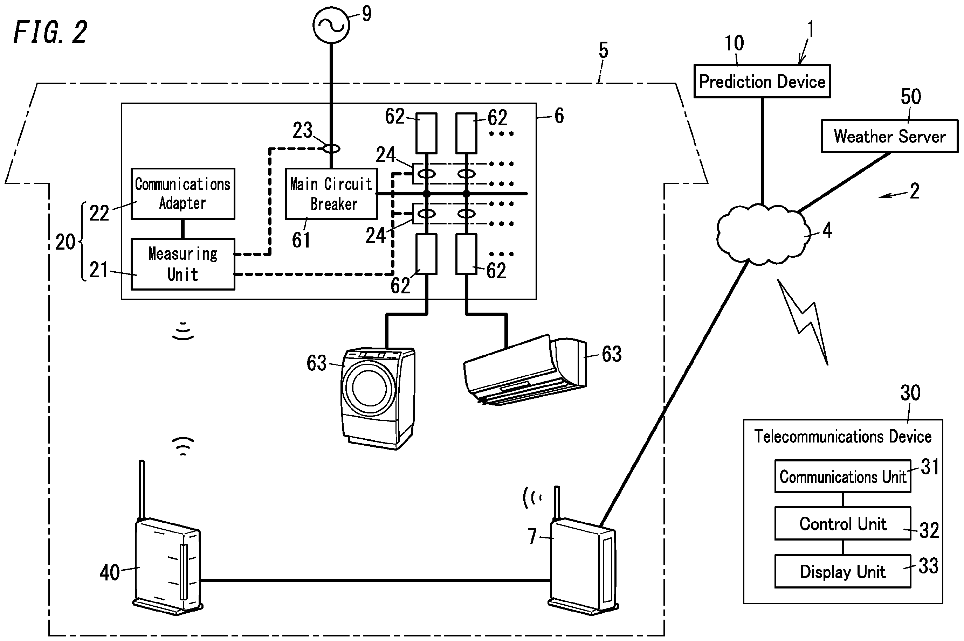

In the following description of an exemplary embodiment, an energy prediction system having the function of providing prediction information about the energy consumption of a facility will be described. In this embodiment, the energy prediction system 1 is implemented as a prediction device 10 as shown in FIGS. 1 and 2.

In this embodiment, the management system 2 includes the prediction device 10 serving as the energy prediction system 1, a measuring system 20, a telecommunications device 30, a controller 40, and a weather server 50 as shown in FIG. 2.

The prediction device 10 is connected to the measuring system 20 via a network 4 as shown in FIG. 2. The measuring system 20 is a system for measuring, as a measured value (energy consumption information), at least one of a power consumption or a power usage with respect to each of a plurality of branch circuits in the facility 5. Also, as used herein, the "facility" refers to a facility such as a dwelling house to be supplied with electrical power and includes not only a facility to be supplied with electrical power by an electrical power supplier such as a power company but also a facility to be supplied with electrical power by an off-grid power system such as a solar power generator. In this embodiment, a single-family dwelling house will be described as an exemplary facility 5.

As shown in FIG. 2, the prediction device 10 is connected to the weather server 50 via the network 4. The weather server 50 acquires, on a monthly basis (i.e., every first predetermined period), estimated information indicating an estimated environmental state in the first predetermined period at a place where a management target is located. Specifically, the weather server 50 estimates a predicted average temperature (estimated information) of the current month based on past data (about temperatures) collected at the place where the facility 5 as the management target is located. Then, the weather server 50 transmits the estimated information thus acquired to the prediction device 10 via the network 4. The weather server 50 also acquires, every second predetermined period that is shorter than the first predetermined period (e.g., on a daily basis), the outside temperature (as a piece of environmental information) of a region where the facility is located. The weather server 50 transmits the environmental information thus acquired to the prediction device 10 via the network 4. Note that the facility 5 is only an example and the management target is not limited to the facility 5. In this example, the outside temperature may be, for example, the average temperature in a corresponding second predetermined period.

The prediction device 10 predicts, on a monthly basis, the quantity of energy that should be consumed (power consumption) during a corresponding month as a first predicted value based on at least the estimated information out of the estimated information and the environmental information. The prediction device 10 also predicts, based on the measured value obtained every day by the measuring system 20, the energy that will be consumed (power consumption) at the end of the month to which the day belongs, as a second predicted value. The prediction device 10 transmits the first predicted value and the second predicted value thus obtained to the telecommunications device 30.

In addition, the prediction device 10 is also connected to the telecommunications device 30 including a display unit 33 via the network 4 as shown in FIG. 2. The telecommunications device 30 presents, on the display unit 33, the information (namely, the first predicted value and the second predicted value) provided by the energy prediction system 1 (prediction device 10). This allows the telecommunications device 30 to present, to the customer who is the owner of the telecommunications device 30, the prediction information provided by the energy prediction system 1. That is to say, the customer may visually check the information about the energy consumption at the facility 5 by viewing the images displayed on the screen of the display unit 33.

Note that the customer (i.e., the owner of the telecommunications device 30) who is provided with services via the telecommunications device 30 is the same person as a resident (i.e., the user of the facility 5). As used herein, the "user of the facility 5" refers to a person who uses the facility 5. In this embodiment in which the facility 5 is a dwelling house, the user of the facility 5 is a resident of the facility 5. If multiple persons live in the same facility 5, then the "user of the facility 5" may refer to one of the multiple residents or may also refer to two or more (or even all) of the residents. In the following description, "the user of the facility 5" will be hereinafter simply referred to as a "resident."

The measuring system 20 provided for the facility 5 acquires data about the quantity of electricity used in the facility 5 (i.e., acquires power usage data). Specifically, the measuring system 20 acquires, as usage data, the power usage with respect to a plurality of branch circuits in the facility 5. An appliance 63 is connected to each of the plurality of branch circuits in the facility 5. The appliance 63 may be, for example, a device provided for the facility 5 and is an electrical device that uses electricity. Examples of the appliances 63 include a washing machine and an air conditioner.

The controller 40 may be, for example, a home energy management system (HEMS) controller. The controller 40 may communicate with the measuring system 20. In addition, the controller 40 is also connected to the network 4 via a router 7. The controller 40 transmits, at regular intervals, the measured values provided by the measuring system 20 to a server device.

### (2) Configuration

### (2.1) Measuring system

First, a configuration for the measuring system 20 according to this embodiment will be described.

As shown in FIG. 2, the measuring system 20 includes a measuring unit 21, a communications adapter 22, and current sensors 23, 24. Among these components, the measuring unit 21, the communications adapter 22, and the current sensors 23, 24 are housed in a cabinet of a distribution board 6. The distribution board 6 includes, in its cabinet, a main circuit breaker 61 to be electrically connected to a grid power supply 9, and a plurality of branch circuit breakers 62 which are electrically connected to a secondary side circuit section of the main circuit breaker 61.

The measuring unit 21 is electrically connected to the current sensors 23, 24. The current sensor 23 is provided for a primary side circuit section of the main circuit breaker 61 to measure the amount of electric current flowing through the trunk. The current sensor 24 is provided for each of the plurality of branch circuit breakers 62 to measure the amount of electric current flowing through the branch circuit. As used herein, the "branch circuit" refers to each circuit branched from the trunk via an associated one of the plurality of branch circuit breakers 62. Examples of the "branch circuits" include lines connected to the branch circuit breakers 62, the appliances 63 such as a washing machine and an air conditioner, AC outlets, and wall switches. If the facility 5 is a dwelling house as in this embodiment, such branch circuits are provided for each of a plurality of rooms including a living room, a bedroom, a hallway, a bathroom with a toilet, a kids' room, and a kitchen and for various types of appliances such as light fixtures, cookers, and air conditioners. One branch circuit may include a single appliance 63 or a plurality of appliances 63, whichever is appropriate.

The measuring unit 21 measures, based on the output of the current sensors 23, 24, at least one of a power consumption or the quantity of electricity consumed with respect to each of the trunk and the plurality of branch circuits. The communications adapter 22 transmits the measured values obtained by the measuring unit 21, as measured values of the measuring system 20, to the controller 40 provided for the facility 5. The controller 40 is connected to the network 4 via the router 7. The controller 40 transmits, at regular intervals, the measured values provided by the measuring system 20 to the server device.

That is to say, any of the measured values provided by the measuring system 20 includes at least one of a power consumption or a power usage as measured by the measuring unit 21 with respect to each of the plurality of branch circuits in the facility 5. That is to say, the measured value may be either a power consumption representing the power consumed instantaneously or a power usage representing the quantity of electricity consumed (or used) over a certain period of time, whichever is appropriate. Alternatively, the measured value may also include both a power consumption and a power usage. In this embodiment, the measured value is the power usage (integral power consumption) obtained by calculating an integral of the electricity used over a certain period of time (e.g., at the intervals of 30 minutes from noon).

### (2.2) Energy prediction system (prediction device)

The prediction device 10 serving as the energy prediction system 1 predicts (as a first predicted value) a target value of the quantity of electricity that should be used during a month (i.e., over a first predetermined period) as the target of prediction. In addition, the prediction device 10 also predicts, based on the measured values provided by the measuring system 20, an integral power consumption (as a second predicted value) representing the quantity of electricity that will be used during the month (i.e., over the first predetermined period) as a target of prediction.

The prediction device 10 includes a communications unit 11, a storage unit 12, and a control unit 13 as shown in FIG. 1.

The prediction device 10 includes a computer system including a processor and a memory, for example. The computer system performs the functions of the control unit 13 by making the processor execute a program stored in the memory. In this embodiment, the program to be executed by the processor is stored in advance in the memory of the computer system. Alternatively, the program may also be distributed after having been stored in a non-transitory storage medium such as a memory card or downloaded via a telecommunications line such as the Internet.

The communications unit 11 includes a communications interface to communicate with the telecommunications device 30, the controller 40, and the weather server 50 via a network 4.

The storage unit 12 is implemented as a storage device which may be either a hard disk drive (HDD) or a solid-state drive (SSD), for example.

The storage unit 12 time-sequentially stores the measured values (integral power consumption) provided by the measuring system 20. The storage unit 12 time-sequentially stores the outside temperature (as a piece of environmental information) provided by the weather server 50. The storage unit 12 further stores the estimated information provided by the weather server 50.

In addition, the storage unit 12 further stores a table of correspondence showing a correspondence between the monthly average of the integral power consumption (hereinafter referred to as an "average power usage") that has been calculated based on the data collected in the past and the monthly average temperature (see the following Table 1):

**[Table 1]**

| Month | Average power usage | Average temperature |
|---|---|---|
| January | 24 kWh/month | 4.6°C/month |
| February | 30 kWh/month | 3.2°C/month |
| March | 28 kWh/month | 3.8°C/month |
| ... | ... | ... |

The control unit 13 includes an information acquisition unit 101, an estimated information acquisition unit 102, a consumption information acquisition unit 103, an environmental information acquisition unit 104, a first prediction unit 105, a second prediction unit 106, and an output unit 107 as shown in FIG. 1.

The information acquisition unit 101 receives, via the communications unit 11, the measured value (integral power consumption) provided by the measuring system 20 as the energy consumption information. The information acquisition unit 101 time-sequentially stores the energy consumption information thus received in the storage unit 12. The information acquisition unit 101 also receives, via the communications unit 11, the outside temperature (environmental information) that has been transmitted on a daily basis (i.e., in every second predetermined period) by the weather server 50. The information acquisition unit 101 time-sequentially stores the environmental information thus received in the storage unit 12. The information acquisition unit 101 further receives, from the weather server 50 via the communications unit 11, the predicted average temperature (estimated information) that has been estimated by the weather server 50 with respect to a target month of prediction as the first predetermined period. The information acquisition unit 101 stores the estimated information thus received in the storage unit 12.

To obtain a first predicted value with respect to the target month of prediction, the estimated information acquisition unit 102 acquires (reads out) the estimated information, stored in the storage unit 12, about the target month of prediction from the storage unit 12.

On the other hand, to obtain a second predicted value with respect to the target month of prediction, the consumption information acquisition unit 103 acquires (reads out), from the storage unit 12, the energy consumption information about the consumption of energy at the facility 5 that is the management target every second predetermined period. Specifically, the consumption information acquisition unit 103 acquires, from the storage unit 12, the integral power consumption corresponding to a predetermined number of consecutive days (e.g., for five consecutive days) retroactively from the previous day, as the energy consumption information, among the data stored in the storage unit 12 about the integral power consumption.

To obtain a first predicted value with respect to the target month of prediction, the environmental information acquisition unit 104 acquires, from the storage unit 12, every piece of environmental information that has been provided by the weather server 50 with respect to the target month of prediction retroactively from the previous day. That is to say, the environmental information acquisition unit 104 acquires the environmental information in every second predetermined period included in the first predetermined period.

For example, in a situation where the first predicted value needs to be obtained on March 1 with the month of March specified as the target month of prediction, the previous day is the last day of the month of February. Thus, in that case, the environmental information acquisition unit 104 does not acquire the environmental information.

On the other hand, in a situation where the first predicted value needs to be obtained on March 3 with the month of March specified as the target month of prediction, the previous day is March 2. Thus, in that case, there is environmental information that has been provided by the weather server 50 with respect to the target month of prediction retroactively from the previous day (March 2). Specifically, there is environmental information with respect to the two days of March 1 and March 2. Thus, in that case, the environmental information acquisition unit 104 acquires every piece of environmental information (two pieces of environmental information) with respect to the two days of March 1 and March 2.

The first prediction unit 105 predicts, as the first predicted value, the quantity of energy that should be consumed over the first predetermined period based on a correlation between the estimated information and energy consumption.

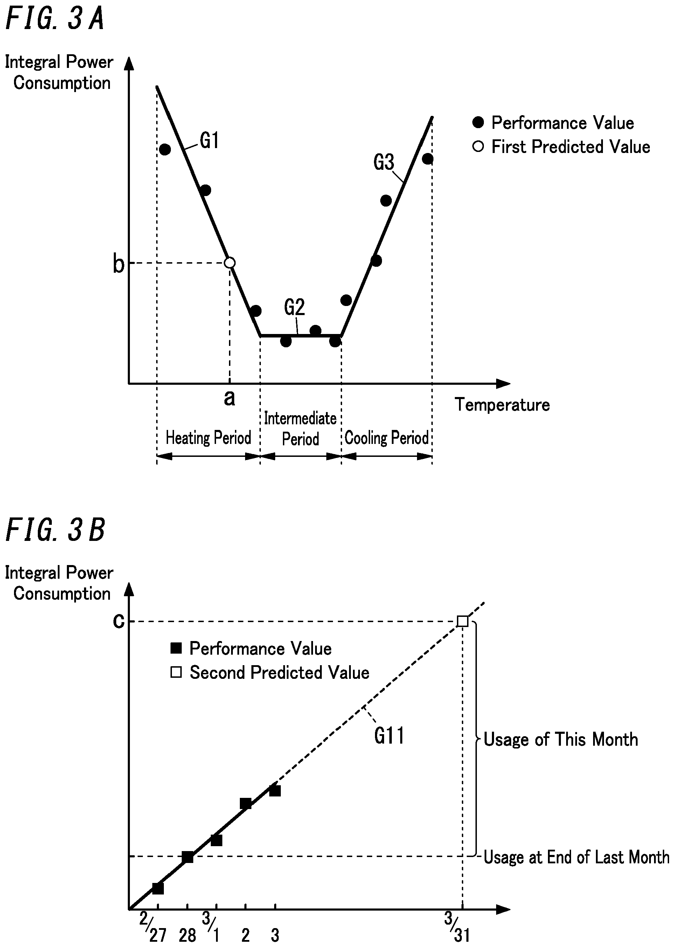

Specifically, the first prediction unit 105 performs a regressive analysis in accordance with the relationship between the average integral power consumption and the monthly average temperature shown in Table 1. For example, the first prediction unit 105 divides one year into the three periods of a heating period, an intermediate period, and a cooling period as shown in FIG. 3A and performs a primary regressive analysis on these periods to obtain three lines G1-G3, each representing a correlation between the average power usage and the average temperature. The first prediction unit 105 predicts, as the first predicted value, the integral power consumption of the electricity that should be consumed during the target month of prediction based on the estimated information acquired by the estimated information acquisition unit 102 with respect to the target month of prediction and the graphs represented by the lines G1-G3 shown in FIG. 3A. For example, the first prediction unit 105 obtains, by reference to the graph shown in FIG. 3A, a power usage corresponding to the estimated information (predicted average temperature) with respect to the target month of prediction. For example, if the predicted average temperature has a value "a," then the first prediction unit 105 obtains, as the first predicted value, a power usage "b" corresponding to the predicted average temperature by reference to the graph shown in FIG. 3A.

Furthermore, the first prediction unit 105 corrects, in accordance with the environmental information acquired by the environmental information acquisition unit 104 in every second predetermined period (day) included in the first predetermined period (i.e., the target month of prediction), the first predicted value thus obtained, thereby updating the first predicted value. For example, suppose a temperature (i.e., the average temperature of the target month of prediction) corresponding to the first predicted value obtained at a point in time (e.g., on July 1) when the environmental information has not been acquired yet is 25°C and the two pieces of environmental information acquired by the environmental information acquisition unit 104 with respect to the two days of July 1 and July 2 indicate 24°C and 23°C, respectively. In that case, the first prediction unit 105 calculates a value regarding a daily average temperature and used for correction (i.e., a correction value) by the mathematical formula: "correction value = (average temperature of target month of prediction - environmental information) / number of days of target month of prediction." The first prediction unit 105 subtracts the total of the daily correction values from the average temperature of the target month of prediction to calculate a new average temperature. The first prediction unit 105 corrects the first predicted value into a power usage corresponding to the new average temperature, thereby updating the first predicted value.

The second prediction unit 106 predicts, in accordance with the energy consumption information about each of a predetermined number of second predetermined periods, the quantity of energy that will be consumed over the first predetermined period as a second predicted value. Specifically, the second prediction unit 106 calculates, based on the energy consumption information acquired by the consumption information acquisition unit 103 with respect to each of the predetermined number of second predetermined periods, the quantity of the electricity consumed on a daily basis (i.e., calculates the integral power consumption). The second prediction unit 106 performs a primary regressive analysis as the regressive analysis based on the relationship between the integral power consumptions obtained on a daily basis and the number of days of the target month of prediction and predicts, as the second predicted value, the integral power consumption with respect to the last day of the target month of prediction.

For example, suppose a situation where the second predicted value needs to be obtained on March 4. In that case, the consumption information acquisition unit 103 acquires, from the storage unit 12, the integral power consumptions for a predetermined number of consecutive days (e.g., for five consecutive days) retroactively from the previous day (i.e., March 3) as the energy consumption information. That is to say, the consumption information acquisition unit 103 acquires the integral power consumptions for the period from February 27 through March 3 from the storage unit 12. Then, the consumption information acquisition unit 103 performs a primary regressive analysis based on the integral power consumptions for the period from February 27 through March 3 to plot the line G11 shown in FIG. 3B. The second prediction unit 106 obtains, based on the line G11, an integral power consumption "c" with respect to March 31, as the second predicted value.

If the primary regressive analysis includes the integral power consumption representing the quantity of electricity consumed at the end of the previous month, then the second prediction unit 106 removes the integral power consumption representing the quantity of electricity consumed at the end of the previous month from the integral power consumption "c" with respect to the day of March 31. Specifically, the second prediction unit 106 predicts, as the second predicted value, the quantity of the electricity that will be consumed during the target month of prediction (i.e., March), by subtracting the integral power consumption representing the quantity of the electricity consumed over the period from February 27 through February 28 from the integral power consumption "c."

On the other hand, unless the primary regressive analysis includes the integral power consumption representing the quantity of electricity consumed at the end of the previous month, the second prediction unit 106 predicts, as the second predicted value, the integral power consumption "c" with respect to the day of March 31.

The output unit 107 outputs prediction result information about the first predicted value and the second predicted value to the telecommunications device 30 via the communications unit 11 and the network 4. Specifically, the output unit 107 outputs, as the prediction result information, information about a graph representing the first predicted value and a graph passing through the second predicted value and indicating how the integral power consumption changes on a second predetermined period basis (e.g., the graph shown in FIG. 3B) to the telecommunications device 30. In other words, the output unit 107 outputs the prediction result information to the telecommunications device to make the telecommunications device 30 display the graph representing the first predicted value and the graph passing through the second predicted value and indicating how the integral power consumption changes on a second predetermined period basis. More specifically, the output unit 107 makes the telecommunications device 30 display the first predicted value as a target value of the integral power consumption representing the quantity of the electricity that should be consumed over the target period of prediction and also makes the telecommunications device 30 display, as information based on the second predicted value, the estimated information representing how the integral power consumption changes in every second predetermined period included in the first predetermined period. In this case, the estimated information may be the graph shown in FIG. 3B, namely, the line G11. If a prediction point that is a point in time when the first predicted value and the second predicted value are obtained is included in the target month of prediction, then the estimated information includes, as a performance value in the current second predetermined period, the energy consumption information that the consumption information acquisition unit 103 has acquired from the beginning of the target month of prediction through the prediction point.

### (2.3) Telecommunications device

The telecommunications device 30 includes a communications unit 31, a control unit 32, and a display unit 33 as shown in FIG. 2. The telecommunications device 30 may be a smartphone, for example.

The telecommunications device 30 includes a computer system including a processor and a memory, for example. The computer system performs the functions of the control unit 32 by making the processor execute a program stored in the memory. In this embodiment, the program to be executed by the processor is stored in advance in the memory of the computer system. Alternatively, the program may also be distributed after having been stored in a non-transitory storage medium such as a memory card or downloaded via a telecommunications line such as the Internet.

The communications unit 31 includes a communications interface for communicating with the prediction device 10 over the network 4.

The control unit 32 has the capability of generating a screen image to be displayed on the display unit 33 and controlling the display unit 33 to have the screen image thus generated displayed on the display unit 33. That is to say, the telecommunications device 30 implemented as a smartphone performs the function of the control unit 32 for controlling the display unit 33 by installing a dedicated software program in itself and running the application software program.

On receiving the prediction result information via the communications unit 31, the control unit 32 makes the display unit 33 display not only the first predicted value as a target value for the target month of prediction (i.e., the first predetermined period) but also the integral power consumption change information.

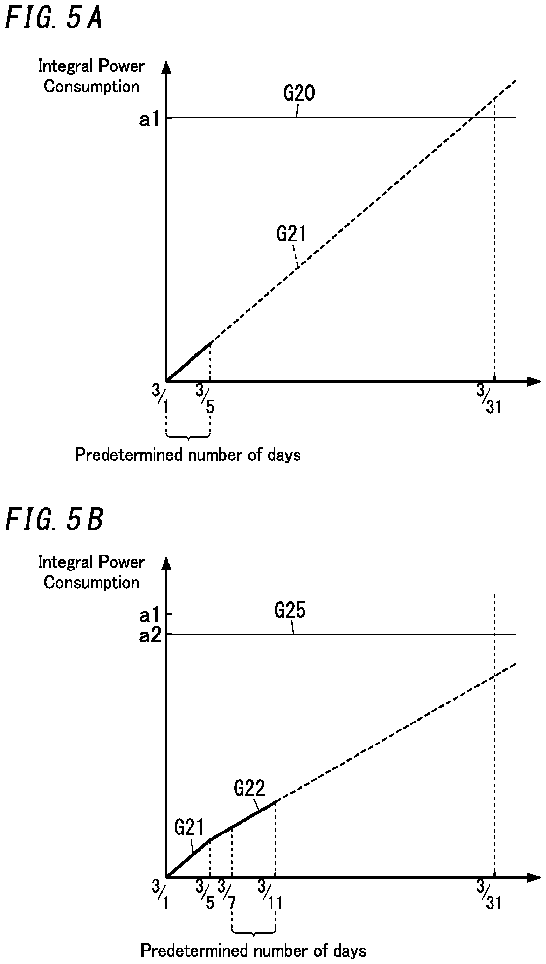

For example, as shown in FIG. 5A, the control unit 32 makes the display unit 33 display not only the first predicted value "a1" as a target value (see the line G20) but also a line G21 passing through the second predicted value obtained based on the energy consumption information about the period from March 1 through March 5 as a graph.

### (3) Operation

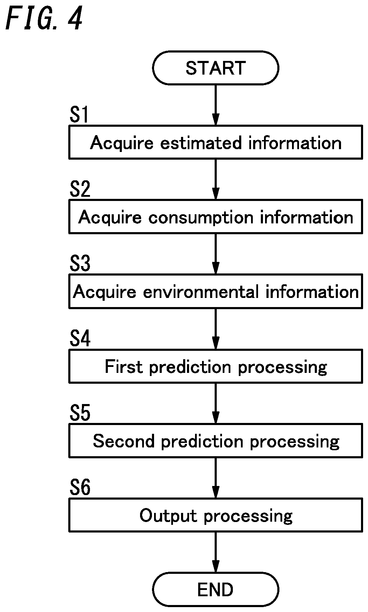

Next, it will be described with reference to the flowchart shown in FIG. 4 how the prediction device 10 performs the operation of obtaining the first predicted value and the second predicted value.

The estimated information acquisition unit 102 acquires, from the storage unit 12, the estimated information stored in the storage unit 12 with respect to the target month of prediction (e.g., the predicted average temperature of the target month of prediction) (in Step S1).

The consumption information acquisition unit 103 acquires, from the storage unit 12, the integral power consumptions with respect to a predetermined number of consecutive days (e.g., five consecutive days) retroactively from the previous day, as the energy consumption information, among the integral power consumptions stored in the storage unit 12 (in Step S2).

The environmental information acquisition unit 104 acquires environmental information in every second predetermined period included in the first predetermined period (in Step S3). Note that if the first predicted value needs to be obtained on the first day of the target month of prediction, then the environmental information acquisition unit 104 does not acquire the environmental information.

The first prediction unit 105 predicts, based on the correlation between the estimated information and the energy consumption, the quantity of the energy that should be consumed over the first predetermined period as the first predicted value (in Step S4).

Specifically, the first prediction unit 105 performs, in accordance with the relationship between the average integral power consumption and the monthly average temperature shown in Table 1, a primary regressive analysis to plot the lines G1-G3 representing the correlation between the average power usage and the average temperature for the heating, intermediate, and cooling periods, respectively (see FIG. 3A).

Unless the environmental information acquisition unit 104 has acquired the environmental information, the first prediction unit 105 predicts, based on the estimated information acquired by the estimated information acquisition unit 102 for the target month of prediction and the graph consisting of the lines G1-G3 shown in FIG. 3A, the integral power consumption representing the quantity of the electricity that should be consumed over the target month of prediction as the first predicted value.

On the other hand, if the environmental information acquisition unit 104 has acquired the environmental information, the first prediction unit 105 corrects, in accordance with the environmental information acquired with respect to every second predetermined period (day), the first predicted value thus obtained, thereby updating the first predicted value. For example, the first prediction unit 105 calculates, by the mathematical formula described above, a correction value with respect to the daily average temperature. The first prediction unit 105 subtracts the total of the daily correction values from the average temperature of the target month of prediction to calculate a new average temperature. The first prediction unit 105 corrects the first predicted value into a power usage corresponding to the new average temperature, thereby updating the first predicted value.

The second prediction unit 106 predicts, in accordance with the energy consumption information about a predetermined number of second predetermined periods, the integral power consumption representing the quantity of energy that will be consumed over the first predetermined period as a second predicted value (in Step S5). Specifically, the second prediction unit 106 performs a primary regressive analysis as the regressive analysis based on the relationship between the daily integral power consumption and the number of days of the target month of prediction and predicts, as the second predicted value, the integral power consumption with respect to the last day of the target month of prediction.

If the primary regressive analysis includes the integral power consumption representing the quantity of the electricity consumed at the end of the previous month, then the second prediction unit 106 removes the integral power consumption representing the quantity of electricity consumed at the end of the previous month from the integral power consumption with respect to the last day of the target month of prediction obtained as a result of the primary regressive analysis. The second prediction unit 106 predicts the remaining integral power consumption as the second predicted value. On the other hand, unless the primary regressive analysis includes the integral power consumption representing the quantity of the electricity consumed at the end of the previous month, the second prediction unit 106 predicts, as the second predicted value, the integral power consumption with respect to the last day of the target month of prediction obtained as a result of the primary regressive analysis.

The output unit 107 outputs prediction result information about the first predicted value and the second predicted value to the telecommunications device 30 (in Step S6). Specifically, the output unit 107 outputs, as the prediction result information, information about a graph representing the first predicted value and a graph passing through the second predicted value and indicating how the integral power consumption changes (e.g., the graph shown in FIG. 3B) to the telecommunications device 30.

### (4) Advantages

As can be seen from the foregoing description, the prediction device 10 (energy prediction system 1) obtains a first predicted value and a second predicted value and outputs information based on the prediction result information about the first predicted value and the second predicted value to the telecommunications device 30 to make the telecommunications device 30 display the information based on the prediction result information.

Thus, displaying the first predicted value tells the user a target value of the electricity that should be consumed over the target month of prediction. In addition, displaying the energy change information including the second predicted value tells the user a power saving status in the target month of prediction. For example, if a graph representing the target value (first predicted value) and a graph representing the energy change information intersect with each other in the target month of prediction, then the user may learn that the power saving status is bad. This allows prompting the user to save more power. On the other hand, unless the graph representing the target value (first predicted value) and the graph representing the energy change information intersect with each other in the target month of prediction, then the user may learn that the power saving status is good, i.e., the current power saving status is good enough to accomplish the target.

Also, the same month of the year does not always have the same average temperature every year. That is to say, a month of a particular year may have an average temperature higher or lower than a normal average temperature of the same month every year. Thus, the prediction device 10 corrects and updates the first predicted value based on the environmental information. Then, using the temperature actually acquired by the weather server 50 in the target month of prediction enables predicting that the average temperature of the target month would be higher or lower than the normal average temperature of the same month every year. Updating the first predicted value according to this prediction allows the prediction device 10 to set a target value adapted to the actual environment. For example, presenting the power usage in the summer of the last year as a target value even though the power usage was low in the last summer owing to temperatures lower than usual would force the user to save power unreasonably. In contrast, setting the target value adapted to the actual environment allows the user to save power according to the actual environment.

For example, the first prediction unit 105 corrects, based on the daily environmental information for the period from March 1 through March 5 (as second predetermined periods), the first predicted value calculated based on the estimated information (predicted average temperature) of the current month (March) obtained at the beginning of the month, thereby updating the first predicted value into a new first predicted value (e.g., into the value "a1" shown in FIG. 5A). Furthermore, the first prediction unit 105 further corrects, based on the daily environmental information for the period from March 1 through March 11 (as second predetermined periods), the first predicted value "a1," thereby updating the first predicted value "a1" into a new first predicted value (such as the value "a2" (< a1) shown in FIG. 5B). This allows the user to save power according to the actual environment.

Furthermore, according to the exemplary embodiment, the consumption information acquisition unit 103 acquires, from the storage unit 12, the integral power consumptions for a predetermined number of consecutive days (e.g., five consecutive days) retroactively from the previous day, as the energy consumption information among the integral power consumptions stored in the storage unit 12. That is to say, the prediction device 10 predicts the integral power consumption representing the quantity of the electricity that will be consumed over the target month of prediction based on the latest power consumption status. Thus, when the prediction is made in the middle (e.g., day 15) of the target month of prediction, the measured value obtained at the beginning of the target month of prediction is not used. If power is not saved at the beginning of the target month of prediction but starts to be saved halfway through the target month of prediction, the prediction device 10 may predict, based on the status of the power consumption during the period in which the power saving is performed, the integral power consumption representing the quantity of electricity that will be consumed over the target month of prediction.

For example, if the user does not perform power saving in the period from March 1 through March 5, then the integral power consumption representing the quantity of the electricity that will be consumed over the target month of prediction (i.e., the month of March) will exceed the target value (first predicted value) "a1" as indicated by the line G21. Suppose a situation where the user has started saving power from March 6 on and the integral power consumption representing the quantity the electricity to be consumed over the target month of prediction needs to be predicted based on the status of the power consumption during the period from March 7 through March 11. In that case, the gradient of the line G22 obtained by the prediction will be less steep than that of the line G21 according to the power consumption status in the period from March 1 through March 5 (see FIG. 5B). That is to say, using the latest power consumption status enables obtaining the second predicted value according to the status of power saving at the prediction point. This allows the user to determine whether or not the status of the ongoing power saving is effective to achieve the target value. For example, the user may decide that the status of the ongoing power saving be effective to achieve the target value, since the line G25 representing the first predicted value "a2" and the line G22 do not intersect with each other at the point in time of March 31 as shown in FIG. 5B.

### (5) Variations

Next, variations will be enumerated one after another. Optionally, any of the variations to be described below may be adopted as appropriate in combination with the exemplary embodiment described above.

### (5.1) First variation

In the exemplary embodiment described above, information based on the prediction result information is displayed on the telecommunications device 30. However, this configuration is only an example and should not be construed as limiting.

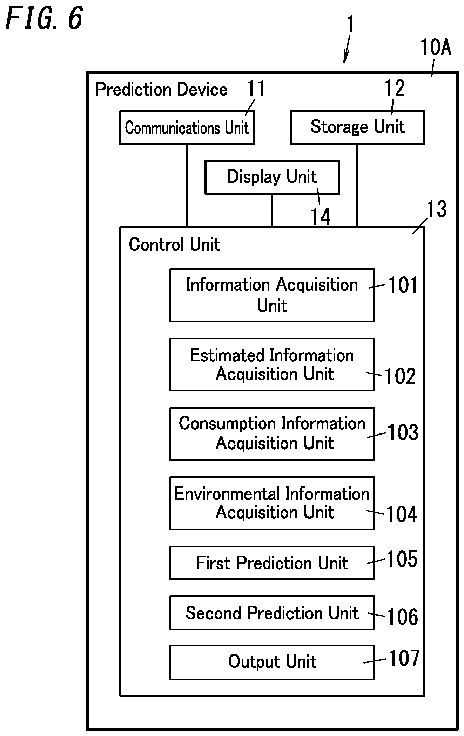

Alternatively, the prediction device 10 may display the information based on the prediction result information. In that case, a prediction device 10A of an energy prediction system 1 according to this first variation includes not only every constituent element of the prediction device 10 of the first embodiment described above but also a display unit 14 as shown in FIG. 6.

The output unit 107 has the capability of generating a screen image to be displayed on the display unit 14 and outputting the screen image to the display unit 14 to have the screen image displayed on the display unit 14. For example, the output unit 107 makes the display unit 14 display not only the first predicted value as a target value of the target month of prediction (first predetermined period) but also the integral power consumption change information as well.

### (5.2) Second variation

In the exemplary embodiment described above, the prediction device 10 is configured to store the energy consumption information, the estimated information, and the environmental information. However, this configuration is only an example and should not be construed as limiting.

Alternatively, a device different from the prediction device 10 may store the energy consumption information, the estimated information, and the environmental information. Still alternatively, the controller 40 may store the energy consumption information and the weather server 50 may store the estimated information and the environmental information.

In any of these cases, the estimated information acquisition unit 102 of the prediction device 10 acquires the estimated information of the target month of prediction from the device that stores the estimated information. The consumption information acquisition unit 103 of the prediction device 10 acquires, from the device that stores the energy consumption information, the integral power consumption for a predetermined number of consecutive days (e.g., for five consecutive days) retroactively from the previous day, as the energy consumption information. In addition, the environmental information acquisition unit 104 acquires, from the device that stores the environmental information, the environmental information about every second predetermined period included in the first predetermined period.

### (5.3) Third variation

In the exemplary embodiment described above, Table 1 includes the monthly average (average power usage) of the monthly integral power consumption. However, this configuration is only an example and should not be construed as limiting.

Alternatively, Table 1 may include a daily average value of the integral power consumption, instead of the monthly average of the integral power consumption in the current month.

In that case, performing the regressive analysis allows plotting a graph representing a correlation between the temperature and the integral power consumption as the daily average. The first prediction unit 105 acquires the integral power consumption based on the estimated information. The first prediction unit 105 multiplies the integral power consumption acquired by the number of days of the target month of prediction and regards the product as the first predicted value.

### (5.4) Fourth variation

In the exemplary embodiment described above, the output unit 107 may output the first predicted value and the second predicted value as the prediction result information.

The display unit 33 of the telecommunications device 30 displays the first predicted value and the second predicted value. Comparing the magnitudes of the first predicted value and the second predicted value displayed with each other tells the user the status of power saving in the target month of prediction.

### (5.5) Fifth variation

In the exemplary embodiment described above, the energy is supposed to be electrical power (electricity). However, this is only an example and should not be construed as limiting. Alternatively, the energy may also be gas or tap water, for example.

### (5.6) Sixth variation

In the exemplary embodiment described above, the prediction device 10 has the capability of obtaining the first predicted value and the second predicted value. However, this is only an example and should not be construed as limiting. Alternatively, the controller 40 may have this capability. Still alternatively, this capability may also be distributed in the prediction device 10 and the controller 40.

### (5.7) Seventh variation

In the exemplary embodiment described above, the first prediction unit 105 is configured to perform the primary regressive analysis to obtain the correlation between the average power usage and the average temperature. However, this configuration is only an example and should not be construed as limiting. Alternatively, the first prediction unit 105 may perform a secondary regressive analysis to obtain the correlation between the average power usage and the average temperature.

Furthermore, in the exemplary embodiment described above, the second prediction unit 106 is configured to perform the primary regressive analysis to obtain the second predicted value. However, this configuration is only an example and should not be construed as limiting. Alternatively, the second prediction unit 106 may also perform a secondary regressive analysis to obtain the second predicted value.

### (5.8) Eighth variation

In the exemplary embodiment described above, the prediction device 10 is configured to obtain the first predicted value and the second predicted value with respect to the target month of prediction based on the relation between the quantity of electricity used in the facility 5 and the temperature. However, this configuration is only an example and should not be construed as limiting.

Alternatively, the prediction device 10 may also obtain the first predicted value and the second predicted value with respect to the target month of prediction based on the relation between the quantity of electricity used in the facility 5 and the humidity. In that case, the estimated information acquisition unit 102 acquires, from the weather server 50, a predicted average humidity of the target month of prediction as the estimated information. The environmental information acquisition unit 104 acquires an average humidity on a second predetermined period basis as the environmental information. The first prediction unit 105 obtains a correlation between the average humidity and the average power usage and predicts, as the first predicted value, an integral power consumption corresponding to the predicted average humidity. Furthermore, the first prediction unit 105 corrects the first predicted value based on the average humidity on a second predetermined period basis.

### (5.9) Ninth variation

In the exemplary embodiment described above, the prediction device 10 is configured to acquire the outside temperature as the environmental information. However, this configuration is only an example and should not be construed as limiting. Alternatively, the prediction device 10 may also acquire an insolation as the environmental information.

### (5.10) Tenth variation

When obtaining the second predicted value, the second prediction unit 106 may perform, as well as the first prediction unit 105, a regressive analysis based on the correlation between the temperature and the power usage. In the heating period and the cooling period, in particular, there is correlation between the power usage and the temperature, and therefore, it is effective to perform the regressive analysis.

In that case, the first prediction unit 105 performs the regressive analysis for a relatively long term, while the second prediction unit 106 performs the regressive analysis for a relatively short term, and therefore, the first predicted value and the second predicted value are different from each other.

### (5.11) Eleventh variation

In the exemplary embodiment described above, the predicted average temperature is an exemplary piece of estimated information. However, the estimated information does not have to be the predicted average temperature.

Rather, the estimated information has only to be any other type of weather information about the weather in the first predetermined period. The weather information may be information about the predicted average temperature, the predicted highest temperature, cooling degree days (CDDs), heating degree days (HDDs), the humidity, or a rainfall or snowfall.

### (Other variations)

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. The same functions as those of the energy prediction system 1 may also be implemented as an energy prediction method, a computer program, or a storage device that stores a program thereon. An energy prediction method for an energy prediction system 1 according to an aspect includes an estimated information acquisition step, a consumption information acquisition step, a first prediction step, an environmental information acquisition step, a second prediction step, and an output step. The estimated information acquisition step includes acquiring estimated information indicating an estimated environmental state in a first predetermined period at a place where a management target (such as a facility 5) is located. The consumption information acquisition step includes acquiring energy consumption information about a quantity of energy consumed by the management target in every second predetermined period. The first prediction step includes predicting, based on the estimated information, a quantity of energy to be consumed over the first predetermined period, as a first predicted value. The environmental information acquisition step includes acquiring environmental information about an environment at the place in every second predetermined period included in the first predetermined period. The first prediction step further includes correcting and updating the first predicted value in accordance with the environmental information.

The second prediction step includes predicting, in accordance with the energy consumption information about respective quantities of energy consumed in a predetermined number of second predetermined periods, a quantity of energy that is going to be consumed over the first predetermined period, as a second predicted value. The output step includes outputting prediction result information about the first predicted value and the second predicted value. A program according to another aspect is designed to cause a computer system to perform the energy prediction method described above.

The energy prediction system 1 according to the present disclosure or the agent that performs the energy prediction method described above includes a computer system. The computer system includes a processor and a memory as hardware components. The functions of the energy prediction system 1 according to the present disclosure or the agent that performs the energy prediction method described above may be performed by making the processor execute a program stored in the memory of the computer system. The program may be stored in advance in the memory of the computer system. Alternatively, the program may also be downloaded through a telecommunications line. Still alternatively, the program may be distributed after having been stored in some non-transitory storage medium such as a memory card, an optical disc, or a hard disk drive, any of which is readable for the computer system. The processor of the computer system may be implemented as a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The energy prediction system 1 as a computer system may also be a system implemented as a single or a plurality of computers. For example, at least some functions of the energy prediction system 1 may be implemented as a cloud computing system as well.

### (Recapitulation)

As can be seen from the foregoing description, an energy prediction system (1) according to a first aspect includes an estimated information acquisition unit (102), a consumption information acquisition unit (103), a first prediction unit (105), a second prediction unit (106), and an output unit (107). The estimated information acquisition unit (102) acquires estimated information indicating an estimated environmental state in a first predetermined period at a place where a management target (such as a facility 5) is located. The consumption information acquisition unit (103) acquires energy consumption information about a quantity of energy consumed by the management target in every second predetermined period. The first prediction unit (105) predicts, based on a correlation between the estimated information and energy consumption, a quantity of energy, defining a target value of a quantity of energy that needs to be consumed over the first predetermined period, as a first predicted value. The second prediction unit (106) predicts, in accordance with the energy consumption information about respective quantities of energy consumed in a predetermined number of second predetermined periods, a quantity of energy that is going to be consumed over the first predetermined period, as a second predicted value. The output unit (107) outputs prediction result information about the first predicted value and the second predicted value.

According to this configuration, using the first predicted value as a target value with respect to the first predetermined period tells the user a target value of the energy that should be consumed over the first predetermined period. In addition, using the second predicted value tells the user the quantity of energy that will be consumed over the first predetermined period according to the current energy consumption status. This allows the user to determine whether or not the current power (energy) consumption status will enable reducing the power (energy) consumption to a target value or less at the end of the first predetermined period. In addition, using the first predicted value and the second predicted value also prompts the user to save power (energy).

The energy prediction system (1) according to the first aspect, further includes an environmental information acquisition unit (104). The environmental information acquisition unit (104) acquires environmental information about an environment at the place in every second predetermined period included in the first predetermined period. The first prediction unit (105) further corrects and updates the first predicted value in accordance with the environmental information.

According to this configuration, the first predicted value is updated according to the proximate environment, thus enabling making a prediction based on the environment.

In an energy prediction system (1) according to a second aspect, which is to be implemented in conjunction with the first aspect, the energy is electrical power. The estimated information is weather information about a weather in the first predetermined period. The first prediction unit (105) predicts, based on a correlation between a power usage and the weather information, a power usage adapted to the weather information, as the first predicted value.

This configuration enables predicting an appropriate power usage as the first predicted value according to the latest weather.

In an energy prediction system (1) according to a third aspect, which is to be implemented in conjunction with the second aspect, the second predetermined period is shorter than the first predetermined period. The predetermined number of the second predetermined periods are consecutive with each other. The energy consumption information is an integral power consumption in a corresponding one of the second predetermined periods. The second prediction unit (106) predicts, based on the integral power consumptions with respect to the predetermined number of consecutive second predetermined periods, an integral power consumption over the first predetermined period as the second predicted value.

This configuration enables obtaining the second predicted value based on integral power consumptions with respect to the predetermined number of consecutive second predetermined periods.

An energy prediction system (1) according to a fourth aspect, which is to be implemented in conjunction with any one of the first to third aspects, further includes a display unit (14). The display unit (14) presents the first predicted value as a target value with respect to the first predetermined period. In addition, the display unit (14) also displays energy change information. The energy change information includes the second predicted value and represents how energy consumption changes in each second predetermined period included in the first predetermined period.

According to this configuration, energy change information including the second predicted value is displayed, which tells the user the degree of power saving accomplished in the first predetermined period. For example, if the degree of power saving turns out to be bad, the user may be prompted to save power.

In an energy prediction system (1) according to a fifth aspect, which is to be implemented in conjunction with any one of the first to fourth aspects, the output unit (107) outputs the prediction result information to a telecommunications device (30) as an external device to make the telecommunications device (30) display not only the first predicted value as a target value with respect to the first predetermined period but also energy change information based on the second predicted value and representing how the energy consumption changes in every second predetermined period included in the first predetermined period.

According to this configuration, the telecommunications device (30) is made to display the energy change information including the second predicted value, thus allowing the user to lean about the degree of power saving accomplished in the first predetermined period.

In an energy prediction system (1) according to a sixth aspect, which is to be implemented in conjunction with the fourth or fifth aspect, when a prediction point, representing a point in time when the first prediction unit (105) and the second prediction unit (106) make prediction, is included in the first predetermined period, the energy change information includes, as a performance value in a corresponding one of the second predetermined periods, the energy consumption information that the consumption information acquisition unit (103) has acquired from a beginning of the first predetermined period through the prediction point.

This configuration tells the user the degree of power saving accomplished in the first predetermined period.

An energy prediction method according to an seventh aspect includes an estimated information acquisition step, a consumption information acquisition step, a first prediction step, an environmental information acquisition step, a second prediction step, and an output step. The estimated information acquisition step includes acquiring estimated information indicating an estimated environmental state in a first predetermined period at a place where a management target (such as a facility 5) is present. The consumption information acquisition step includes acquiring energy consumption information about a quantity of energy consumed by the management target in every second predetermined period. The first prediction step includes predicting, based on a correlation between the estimated information and energy consumption, a quantity of energy, defining a target value of a quantity of energy that needs to be consumed over the first predetermined period, as a first predicted value. The environmental information acquisition step includes acquiring environmental information about an environment at the place in every second predetermined period included in the first predetermined period. The first prediction step further includes correcting and updating the first predicted value in accordance with the environmental information.

The second prediction step includes predicting, in accordance with the energy consumption information about respective quantities of energy consumed in a predetermined number of second predetermined periods, a quantity of energy that is going to be consumed over the first predetermined period, as a second predicted value. The output step includes outputting prediction result information about the first predicted value and the second predicted value.

This energy prediction method allows the user to determine whether or not the current power (energy) consumption status will enable reducing the power (energy) consumption to a target value or less at the end of the first predetermined period.

A program according to a eighth aspect is a program designed to cause a computer to perform the energy prediction method according to the seventh aspect.

This program allows the user to determine whether or not the current power (energy) consumption status will enable reducing the power (energy) consumption to a target value or less at the end of the first predetermined period.

A storage medium according to a ninth aspect is a non-transitory storage medium that stores thereon the program according to the eighth aspect.

This storage medium allows the user to determine whether or not the current power (energy) consumption status will enable reducing the power (energy) consumption to a target value or less at the end of the first predetermined period.

A management system (2) according to an tenth aspect includes: the energy prediction system (1) according to any one of the first to sixth aspects; an estimated information output unit (such as a weather server 50); and a consumption information output unit (such as a controller 40). The estimated information output outputs the estimated information to the energy prediction system (1). The consumption information output unit outputs the energy consumption information to the energy prediction system (1).

This configuration allows the user to determine whether or not the current power (energy) consumption status will enable reducing the power (energy) consumption to a target value or less at the end of the first predetermined period.

### Reference Signs List

- 1: Energy Prediction System
- 2: Management System
- 5: Facility
- 10: Prediction Device
- 14: Display Unit
- 30: Telecommunications Device
- 102: Estimated Information Acquisition Unit
- 103: Consumption Information Acquisition Unit
- 104: Environmental Information Acquisition Unit
- 105: First Prediction Unit
- 106: Second Prediction Unit
- 107: Output Unit

## Claims

1. An energy prediction system (1) comprising:
an estimated information acquisition unit (102) configured to acquire estimated information indicating an estimated environmental state in a first predetermined period at a place where a management target is located;
a consumption information acquisition unit (103) configured to acquire energy consumption information about a quantity of energy consumed by the management target in every second predetermined period;
a first prediction unit (105) configured to predict, based on a correlation between the estimated information and energy consumption, a quantity of energy, defining a target value of a quantity of energy that needs to be consumed over the first predetermined period, as a first predicted value;
a second prediction unit (106) configured to predict, in accordance with the energy consumption information about respective quantities of energy consumed in predetermined number of second predetermined periods, a quantity of energy that is going to be consumed over the first predetermined period, as a second predicted value;
an output unit (107) configured to output prediction result information about the first predicted value and the second predicted value;
**characterized by**
an environmental information acquisition unit (104) configured to acquire environmental information about an environment at the place in every second predetermined period included in the first predetermined period, wherein
the first prediction unit (105) is further configured to correct and update the first predicted value in accordance with the environmental information.

2. The energy prediction system (1) of claim 1, wherein
the energy is electrical power,
the estimated information is weather information about a weather in the first predetermined period, and
the first prediction unit (105) is configured to predict, based on a correlation between a power usage and the weather information, a power usage adapted to the weather information, as the first predicted value.

3. The energy prediction system (1) of claim 2, wherein
the second predetermined period is shorter than the first predetermined period,
the predetermined number of the second predetermined periods are consecutive with each other,
the energy consumption information is an integral power consumption in a corresponding one of the second predetermined periods, and
the second prediction unit (106) is configured to predict, based on the integral power consumptions with respect to the predetermined number of consecutive second predetermined periods, an integral power consumption over the first predetermined period as the second predicted value.

4. The energy prediction system (1) of any one of claims 1 to 3, further comprising a display unit (14), wherein
the display unit (14) is configured to
present the first predicted value as a target value with respect to the first predetermined period, and
display energy change information, the energy change information including the second predicted value and representing how energy consumption changes in each second predetermined period included in the first predetermined period.

5. The energy prediction system (1) of any one of claims 1 to 4, wherein
the output unit (107) is configured to output the prediction result information to a telecommunications device (30) as an external device to make the telecommunications device (30) display not only the first predicted value as a target value with respect to the first predetermined period but also energy change information based on the second predicted value and representing how the energy consumption changes in every second predetermined period included in the first predetermined period.

6. The energy prediction system (1) of claim 4 or 5, wherein
when a prediction point, representing a point in time when the first prediction unit (105) and the second prediction unit (106) make prediction, is included in the first predetermined period,
the energy change information includes, as a performance value in a corresponding one of the second predetermined periods, the energy consumption information that the consumption information acquisition unit (103) has acquired from a beginning of the first predetermined period through the prediction point.

7. An energy prediction method comprising:
an estimated information acquisition step including acquiring estimated information indicating an estimated environmental state in a first predetermined period at a place where a management target is located;
a consumption information acquisition step including acquiring energy consumption information about a quantity of energy consumed by the management target in every second predetermined period;
a first prediction step including predicting, based on a correlation between the estimated information and energy consumption, a quantity of energy, defining a target value of a quantity of energy that needs to be consumed over the first predetermined period, as a first predicted value;
a second prediction step including predicting, in accordance with the energy consumption information about respective quantities of energy consumed in a predetermined number of second predetermined periods, a quantity of energy that is going to be consumed over the first predetermined period, as a second predicted value;
an output step including outputting prediction result information about the first predicted value and the second predicted value;
**characterized by**
an environmental information acquisition step including acquiring environmental information about an environment at the place in every second predetermined period included in the first predetermined period, wherein
the first prediction step further includes correcting and updating the first predicted value in accordance with the environmental information.

8. A program designed to cause a computer to perform the energy prediction method of claim 7.

9. A non-transitory storage medium storing thereon the program of claim 8.

10. A management system (2) comprising:
the energy prediction system (1) of any one of claims 1 to 6;
an estimated information output unit configured to output the estimated information to the energy prediction system (1); and
a consumption information output unit configured to output the energy consumption information to the energy prediction system (1).

## Patentansprüche

1. System (1) zur Energievorhersage, aufweisend:
eine Erfassungseinheit (102) für geschätzte Informationen, die konfiguriert ist, um geschätzte Informationen zu erfassen, die einen geschätzten Umgebungszustand in einer ersten vorbestimmten Periode an einem Ort, an dem sich ein Verwaltungsziel befindet, angeben;
eine Erfassungseinheit (103) für Verbrauchsinformationen, die konfiguriert ist, um Energieverbrauchsinformationen über eine Energiemenge zu erfassen, die von dem Verwaltungsziel in jeder zweiten vorbestimmten Periode verbraucht wird;
eine erste Vorhersageeinheit (105), die konfiguriert ist, um auf der Grundlage einer Korrelation zwischen den geschätzten Informationen und dem Energieverbrauch eine Energiemenge vorherzusagen, wobei sie einen Zielwert einer Energiemenge, die über die erste vorbestimmte Periode zu verbrauchen ist, als einen ersten vorhergesagten Wert definiert;
eine zweite Vorhersageeinheit (106), die konfiguriert ist, um in Übereinstimmung mit den Energieverbrauchsinformationen über die jeweiligen Energiemengen, die in einer vorbestimmten Anzahl von zweiten vorbestimmten Perioden verbraucht wurden, eine Energiemenge, die über die erste vorbestimmte Periode verbraucht werden wird, als einen zweiten vorhergesagten Wert vorherzusagen;
eine Ausgabeeinheit (107), die konfiguriert ist, um Vorhersageergebnisinformationen über den ersten vorhergesagten Wert und den zweiten vorhergesagten Wert auszugeben;
**gekennzeichnet durch**
eine Erfassungseinheit (104) für Umgebungsinformationen, die konfiguriert ist, um Umgebungsinformationen über eine Umgebung an dem Ort in jeder zweiten vorbestimmten Periode, die in der ersten vorbestimmten Periode enthalten ist, zu erfassen, wobei
die erste Vorhersageeinheit (105) ferner konfiguriert ist, um den ersten vorhergesagten Wert in Übereinstimmung mit den Umgebungsinformationen zu korrigieren und zu aktualisieren.

2. System (1) zur Energievorhersage nach Anspruch 1, wobei
die Energie elektrischer Strom ist,
die geschätzten Informationen Wetterinformationen über ein Wetter in der ersten vorbestimmten Periode ist, und
die erste Vorhersageeinheit (105) konfiguriert ist, um auf der Grundlage einer Korrelation zwischen einem Stromverbrauch und den Wetterinformationen einen Stromverbrauch, der an die Wetterinformationen angepasst ist, als den ersten vorhergesagten Wert vorherzusagen.

3. System (1) zur Energievorhersage nach Anspruch 2, wobei
die zweite vorbestimmte Periode kürzer ist als die erste vorbestimmte Periode,
die vorbestimmte Anzahl der zweiten vorbestimmten Perioden aufeinander folgen,
die Energieverbrauchsinformationen ein integraler Stromverbrauch in einer entsprechenden der zweiten vorbestimmten Perioden sind, und
die zweite Vorhersageeinheit (106) konfiguriert ist, um auf der Grundlage der integralen Stromverbräuche in Bezug auf die vorbestimmte Anzahl aufeinanderfolgender zweiter vorbestimmter Perioden einen integralen Stromverbrauch über die erste vorbestimmte Periode als den zweiten vorhergesagten Wert vorherzusagen.

4. System (1) zur Energievorhersage nach einem der Ansprüche 1 bis 3, ferner eine Anzeigeeinheit (14) aufweisend, wobei
die Anzeigeeinheit (14) konfiguriert ist, um
den ersten vorhergesagten Wert als einen Zielwert in Bezug auf die erste vorbestimmte Periode darzustellen, und
Energieänderungsinformationen anzuzeigen, wobei die Energieänderungsinformationen den zweiten vorhergesagten Wert enthalten und darstellen, wie sich der Energieverbrauch in jeder zweiten vorbestimmten Periode, die in der ersten vorbestimmten Periode enthalten ist, ändert.

5. System (1) zur Energievorhersage nach einem der Ansprüche 1 bis 4, wobei
die Ausgabeeinheit (107) konfiguriert ist, um die Vorhersageergebnisinformationen an eine Telekommunikationsvorrichtung (30) als eine externe Vorrichtung auszugeben, um die Telekommunikationsvorrichtung (30) dazu zu veranlassen, nicht nur den ersten vorhergesagten Wert als einen Zielwert in Bezug auf die erste vorbestimmte Periode, sondern auch Energieänderungsinformationen anzuzeigen, die auf dem zweiten vorhergesagten Wert basieren und darstellen, wie sich der Energieverbrauch in jeder zweiten vorbestimmten Periode, die in der ersten vorbestimmten Periode enthalten ist, ändert.

6. System (1) zur Energievorhersage nach Anspruch 4 oder 5, wobei
wenn ein Vorhersagepunkt, der einen Zeitpunkt darstellt, zu dem die erste Vorhersageeinheit (105) und die zweite Vorhersageeinheit (106) eine Vorhersage erstellen, in der ersten vorbestimmten Periode enthalten ist,
die Energieänderungsinformationen als einen Ergebniswert in einer entsprechenden der zweiten vorbestimmten Perioden die Energieverbrauchsinformationen enthalten, die die Erfassungseinheit (103) für Verbrauchsinformationen von einem Beginn der ersten vorbestimmten Periode bis zu dem Vorhersagepunkt erfasst hat.

7. Verfahren zur Energievorhersage, umfassend:
einen Schritt zum Erfassen von geschätzten Informationen, der ein Erfassen von geschätzten Informationen umfasst, die einen geschätzten Umgebungszustand in einer ersten vorbestimmten Periode an einem Ort, an dem sich ein Verwaltungsziel befindet, angeben;
einen Schritt zum Erfassen von Verbrauchsinformationen, der ein Erfassen von Energieverbrauchsinformationen über eine Energiemenge umfasst, die von dem Verwaltungsziel in jeder zweiten vorbestimmten Periode verbraucht wird;
einen ersten Vorhersageschritt, der ein Vorhersagen einer Energiemenge auf der Grundlage einer Korrelation zwischen den geschätzten Informationen und dem Energieverbrauch umfasst, wobei ein Zielwert einer Energiemenge, die über die erste vorbestimmte Periode zu verbrauchen ist, als ein erster vorhergesagter Wert definiert wird;
einen zweiten Vorhersageschritt, der die Vorhersage einer Energiemenge, die über die erste vorbestimmte Periode verbraucht werden wird, als einen zweiten vorhergesagten Wert in Übereinstimmung mit den Energieverbrauchsinformationen über die jeweiligen Energiemengen, die in einer vorbestimmten Anzahl von zweiten vorbestimmten Perioden verbraucht wurden, umfasst;
einen Ausgabeschritt, der ein Ausgeben von Vorhersageergebnisinformationen über den ersten vorhergesagten Wert und den zweiten vorhergesagten Wert umfasst;
**gekennzeichnet durch**
einen Schritt zum Erfassen von Umgebungsinformationen, der ein Erfassen von Umgebungsinformationen über eine Umgebung an dem Ort in jeder zweiten vorbestimmten Periode, die in der ersten vorbestimmten Periode enthalten ist, umfasst, wobei
der erste Vorhersageschritt ferner ein Korrigieren und Aktualisieren des ersten vorhergesagten Wertes in Übereinstimmung mit den Umgebungsinformationen umfasst.

8. Programm, das dazu dient, einen Computer zu veranlassen, das Energievorhersageverfahren nach Anspruch 7 durchzuführen.

9. Nichtflüchtiges Speichermedium, auf dem das Programm nach Anspruch 8 gespeichert ist.

10. Verwaltungssystem (2), Folgendes aufweisend:
das System (1) zur Energievorhersage nach einem der Ansprüche 1 bis 6;
eine Ausgabeeinheit für geschätzte Informationen, die konfiguriert ist, um die geschätzten Informationen an das Energievorhersagesystem (1) auszugeben; und
eine Verbrauchsinformationsausgabeeinheit, die konfiguriert ist, um die Energieverbrauchsinformationen an das Energievorhersagesystem (1) auszugeben.

## Revendications

1. Système de prédiction d'énergie (1) comprenant :
une unité d'acquisition d'informations estimées (102) configurée pour acquérir des informations estimées indiquant un état environnemental estimé pendant une première période prédéterminée à un emplacement où une cible de gestion est située ;
une unité d'acquisition d'informations de consommation (103) configurée pour acquérir des informations de consommation d'énergie concernant une quantité d'énergie consommée par la cible de gestion au cours de chaque deuxième période prédéterminée ;
une première unité de prédiction (105) configurée pour prédire, sur la base d'une corrélation entre les informations estimées et la consommation d'énergie, une quantité d'énergie, définissant une valeur cible d'une quantité d'énergie qui doit être consommée au cours de la première période prédéterminée, en tant que première valeur prédite ;
une deuxième unité de prédiction (106) configurée pour prédire, en fonction des informations de consommation d'énergie concernant les quantités respectives d'énergie consommée au cours d'un nombre prédéterminé de deuxièmes périodes prédéterminées, une quantité d'énergie qui va être consommée au cours de la première période prédéterminée, en tant que deuxième valeur prédite ;
une unité de délivrance (107) configurée pour délivrer des informations de résultat de prédiction concernant la première valeur prédite et la deuxième valeur prédite ;
**caractérisé par**
une unité d'acquisition d'informations environnementales (104) configurée pour acquérir des informations environnementales concernant un environnement à l'emplacement au cours de chaque deuxième période prédéterminée incluse dans la première période prédéterminée, dans lequel
la première unité de prédiction (105) est en outre configurée pour corriger et mettre à jour la première valeur prédite en fonction des informations environnementales.

2. Système de prédiction d'énergie (1) selon la revendication 1, dans lequel
l'énergie est une énergie électrique,
les informations estimées sont des informations météorologiques concernant des conditions météorologiques au cours de la première période prédéterminée, et
la première unité de prédiction (105) est configurée pour prédire, sur la base d'une corrélation entre une consommation d'énergie et les informations météorologiques, une consommation d'énergie adaptée aux informations météorologiques, en tant que première valeur prédite.

3. Système de prédiction d'énergie (1) selon la revendication 2, dans lequel
la deuxième période prédéterminée est plus courte que la première période prédéterminée,
le nombre prédéterminé des deuxièmes périodes prédéterminées sont consécutives les unes aux autres,
les informations de consommation d'énergie sont une consommation d'énergie intégrale dans l'une correspondante des deuxièmes périodes prédéterminées, et
la deuxième unité de prédiction (106) est configurée pour prédire, sur la base des consommations d'énergie intégrales par rapport au nombre prédéterminé de deuxièmes périodes prédéterminées consécutives, une consommation d'énergie intégrale au cours de la première période prédéterminée en tant que deuxième valeur prédite.

4. Système de prédiction d'énergie (1) selon l'une quelconque des revendications 1 à 3, comprenant en outre une unité d'affichage (14), dans laquelle
l'unité d'affichage (14) est configurée pour
présenter la première valeur prédite en tant que valeur cible pour la première période prédéterminée, et
afficher des informations de changement d'énergie, les informations de changement d'énergie comprenant la deuxième valeur prédite et représentant la façon selon laquelle la consommation d'énergie change au cours de chaque deuxième période prédéterminée incluse dans la première période prédéterminée.

5. Système de prédiction d'énergie (1) selon l'une quelconque des revendications 1 à 4, dans lequel
l'unité de délivrance (107) est configurée pour délivrer les informations de résultat de prédiction à un dispositif de télécommunications (30) en tant que dispositif externe pour amener le dispositif de télécommunications (30) à afficher non seulement la première valeur prédite en tant que valeur cible pour la première période prédéterminée, mais également des informations de changement d'énergie basées sur la deuxième valeur prédite et représentant la façon selon laquelle la consommation d'énergie change au cours de chaque deuxième période prédéterminée incluse dans la première période prédéterminée.

6. Système de prédiction d'énergie (1) selon la revendication 4 ou 5, dans lequel
lorsqu'un point de prédiction, représentant un temps auquel la première unité de prédiction (105) et la deuxième unité de prédiction (106) effectuent une prédiction, est inclus dans la première période prédéterminée,
les informations de changement d'énergie comprennent, en tant que valeur de performance dans l'une correspondante des deuxièmes périodes prédéterminées, les informations de consommation d'énergie que l'unité d'acquisition d'informations de consommation (103) a acquises du début de la première période prédéterminée au point de prédiction.

7. Procédé de prédiction d'énergie comprenant :
une étape d'acquisition d'informations estimées comprenant l'acquisition d'informations estimées indiquant un état environnemental estimé pendant une première période prédéterminée à un emplacement où une cible de gestion est située ;
une étape d'acquisition d'informations de consommation comprenant l'acquisition d'informations de consommation d'énergie concernant une quantité d'énergie consommée par la cible de gestion au cours de chaque deuxième période prédéterminée ;
une première étape de prédiction comprenant la prédiction, sur la base d'une corrélation entre les informations estimées et la consommation d'énergie, d'une quantité d'énergie, définissant une valeur cible d'une quantité d'énergie qui doit être consommée au cours de la première période prédéterminée, en tant que première valeur prédite ;
une deuxième étape de prédiction comprenant la prédiction, en fonction des informations de consommation d'énergie concernant les quantités respectives d'énergie consommée au cours d'un nombre prédéterminé de deuxièmes périodes prédéterminées, d'une quantité d'énergie qui va être consommée au cours de la première période prédéterminée, en tant que deuxième valeur prédite ;
une étape de délivrance comprenant la délivrance d'informations de résultat de prédiction concernant la première valeur prédite et la deuxième valeur prédite ;
**caractérisé par**
une étape d'acquisition d'informations environnementales comprenant l'acquisition d'informations environnementales concernant un environnement à l'emplacement au cours de chaque deuxième période prédéterminée incluse dans la première période prédéterminée, dans lequel
la première étape de prédiction comprend en outre la correction et la mise à jour de la première valeur prédite en fonction des informations environnementales.

8. Programme conçu pour amener un ordinateur à réaliser le procédé de prédiction d'énergie selon la revendication 7.

9. Support de stockage non transitoire sur lequel est stocké un programme informatique selon la revendication 8.

10. Système de gestion (2) comprenant :
le système de prédiction d'énergie (1) selon l'une quelconque des revendications 1 à 6 ;
une unité de délivrance d'informations estimées configurée pour délivrer les informations estimées au système de prédiction d'énergie (1) ; et
une unité de délivrance d'informations de consommation configurée pour délivrer les informations de consommation d'énergie au système de prédiction d'énergie (1).
